Europäisches Patentamt

European Patent Office

Office européen des brevets

(11) Numéro de publication: **0 405 206 A1**

## (12) DEMANDE DE BREVET EUROPEEN

(21) Numéro de dépôt: 90110911.6

(22) Date de dépôt: 08.06.90

(51) Int. Cl.⁵: **A61C 1/18**

(30) Priorité: 26.06.89 CH 2365/89

(43) Date de publication de la demande:
02.01.91 Bulletin 91/01

(84) Etats contractants désignés:
AT DE FR IT

(71) Demandeur: **BIEN-AIR SA**
**Länggasse 60**
**CH-2500 Bienne 6(CH)**

(72) Inventeur: **Mosimann, David**
**Ch. des Roseaux 8**
**CH-2503 Bienne(CH)**

(74) Mandataire: **Finck, Dieter et al**
**Patentanwälte v. Füner, Ebbinghaus, Finck**
**Mariahilfplatz 2 & 3; 3**
**D-8000 München 90(DE)**

(54) **Dispositif agencé pour conduire un courant et de l'air entre une pièce à main dentaire et un raccord.**

(57) Le dispositif de transfert est destiné à conduire un courant électrique et de l'air sous pression entre un raccord d'alimentation (4) et le manche (3) d'une pièce à main dentaire, cette dernière pouvant pivoter autour d'un axe longitudinal (xx′) commun aux deux pièces. A cet effet le dispositif conprend au moins une paire d'électrodes cylindriques (14, 37) pour le courant, et des conduits (20, 39) pour l'air.

Une des électrodes (14) est disposée au fond d'une cavité (10) du manche (3) et près de l'axe longitudinal (xx′). L'autre électrode (37) est disposée de même dans une cavité (34) du raccord (4), les deux électrodes s'emboîtant l'une dans l'autre pour réaliser un contact entre elles. Un des conduits (39) est pratiqué dans le raccord (4) et l'autre conduit (20) dans le manche (3), ces conduits débouchant respectivement dans les cavités (34, 10) du raccord et du manche afin de permettre à l'air de circuler dans les cavités et autour des électrodes.

La disposition des électrodes dans des cavités assure leur protection contre les chocs lorsque la pièce à main et le raccord sont séparés, alors que la circulation de l'air permet d'évacuer l'humidite pouvant se trouver dans les cavités et sur les électrodes.

FIG. 6

EP 0 405 206 A1

# DISPOSITIF AGENCE POUR CONDUIRE UN COURANT ET DE L'AIR ENTRE UNE PIECE A MAIN DENTAIRE ET UN RACCORD

La prOsente invention concerne un dispositif de transfert ayant pour fonction de conduire au moins un courant électrique et de l'air comprimé, éventuellement d'autres fluides, entre une pièce à main dentaire et un raccord d'alimentation, la pièce à main étant fixée de manière amovible sur le raccord. Elle concerne plus particulièrement un dispositif rotatif assurant le passage du courant et de l'air lorsque la pièce à main et le raccord sont en outre mobiles l'un par rapport à l'autre, aussi bien en rotation autour d'un axe longitudinal commun qu'en translation suivant cet axe. Le mouvement de rotation a pour but de faciliter l'utilisation de la pièce à main, alors que le mouvement de translation permet de séparer la pièce à main du raccord pour la remplacer par une autre.

De tels dispositifs rotatifs de transfert sont bien connus. Dans les réalisations existantes le dispositif comporte, du côté du raccord, des électrodes radiales disposées sur la face extérieure d'une partie cylindrique du raccord, l'axe de symétrie de cette partie se confondant avec l'axe longitudinal, et, également sur cette partie, des gorges annulaires centrées sur le même axe. Chaque gorge est alimentée en fluide, tel que l'air ou l'eau, par un conduit disposé dans le raccord, et, pour éviter toute fuite, des joints d'étanchéité du type 0 ring sont encore placés de part et d'autre de ces gorges. Du côté de la pièce à main, qui comporte une cavité centrale cylindrique destinée à recevoir la partie cylindrique du raccord, le dispositif comprend des électrodes annulaires centrées sur l'axe longitudinal et disposées sur la face intérieure de la cavité, et des conduits radiaux pratiqués dans la paroi délimitant cette cavité et débouchant à l'extérieur perpendiculairement à sa face intérieure. Le dispositif de transfert, pour remplir sa fonction, est agencé de manière que, la pièce à main étant fixée sur le raccord, chaque electrode radiale soit en contact avec une électrode annulaire, que chaque conduit radial débouche dans une gorge annulaire, et que les joints d'étanchéité prennent appui contre la face intérieure de la cavité cylindrique.

Etant donné la disposition des électrodes à la périphérie du raccord il est évident que, lorsque celui-ci est séparé de la pièce à main, les électrodes se trouvent exposées à des chocs pouvant les détériorer, ce qui constitue un inconvénient important. Cette disposition des électrodes, dont certaines sont en permanence sous tension, présente encore d'autres inconvénients. D'une part, elle n'assure aucune protection contre les courts-circuits accidentels pouvant résulter, par exemple, de la pose du raccord sur une table métallique. Or de tels courts-circuits sont susceptibles de provoquer des étincelles qui, si elles ont lieu à proximité de produits inflammables, peuvent être dangereuses. D'autre part, cette disposition risque de faire courir au praticien un réel danger d'électrocution si des électrodes sont portées à une tension élevée, comme celle de plusieurs centaines de volts nécessaires pour alimenter par exemple le transducteur piézoélectrique d'un détartreur.

Par ailleurs si la pièce à main utilise de l'eau, au moment où elle est fixée sur le raccord, les joints d'étanchéité peuvent entraîner des gouttelettes résiduelles, présentes dans le conduit d'eau, jusqu'au fond de la cavité centrale et sur les électrodes. Or cette humidité est susceptible de corroder les électrodes, ce qui constitue aussi un inconvénient important des réalisations existantes.

L'objet de la présente invention est de proposer un dispositif ne présentant pas ces inconvénients.

Pour atteindre cet objectif, le dispositif rotatif de transfert selon l'invention, agencé pour conduire un courant électrique et de l'air sous pression entre une pièce à main dentaire et un raccord d alimentation et comportant à cet effet une paire d'électrodes et un conduit, la pièce à main et le raccord étant mobiles l'un par rapport à l'autre en rotation autour d'un axe longitudinal commun et en translation le long du même axe, le mouvement de translation permettant de fixer par emboîtement la pièce à main sur le raccord, ou de la séparer de ce raccord, est particulièrement remarquable en ce que :

- une électrode de la paire d'électrodes est disposée à l'intérieur et prés de l'axe de symétrie d'une cavité sensiblement cylindrique de la pièce à main, cette cavité, qui débouche à l'extérieur et dont l'axe de symétrie se confond avec l'axe longitudinal, servant de logement à un organe cylindrique du raccord, cet organe cylindrique étant centré sur l'axe longitudinal;

- l'autre électrode de la paire d'électrodes est disposée à l'intérieur d'une cavité du raccord et près de l'axe longitudinal, la cavité du raccord étant pratiquée dans l'organe cylindrique de celui-ci de manière à déboucher à l'extérieur par une ouverture permettant à l'électrode d'établir un contact permanent avec l'autre électrode quelle que soit la position angulaire de la pièce à main par rapport au raccord; et en ce que

- une partie du conduit est constituée par au moins une partie des cavités de la pièce à main et du raccord afin que les électrodes de la paire d'électrodes se trouvent. dans l'air circulant dans le conduit.

Un avantage de l'invention est que l'électrode du raccord, étant disposée à l'intérieur d'une cavité, est protégée par la paroi de celle-ci contre les chocs et les courts-circuits.

Un autre avantage provient du fait que l'air sous pression, en traversant les cavités dans lesquelles se trouvent les électrodes, permet d'éliminer rapidement l'humidité pouvant se trouver dans ces cavités et sur ces électrodes.

D'autres caractéristiques et avantages de l'invention ressortiront de la description qui va suivre, faite en regard du dessin annexé et donnant, à titre d'exemple explicatif mais nullement limitatif, une forme avantageuse de réalisation d'un tel dispositif de transfert. Sur ce dessin, où les mêmes références se rapportent à des éléments analogues :

- la fig. 1 est une vue d'ensemble montrant une pièce à main dentaire et un raccord d'alimentation conformes à l'invention, le raccord étant fixé sur la pièce à main et sur une prise reliée à un conduit souple d'amenée de courants et de fluides;

- la fig. 2 montre, dans une vue en coupe partielle, l'extrémité de la pièce à main venant se fixer sur le raccord d alimentation, cette extrémité comportant une partie du dispositif de transfert selon l'invention;

- la fig. 3 est une vue en bout de la pièce à main représentée sur la fig. 2;

- la fig. 4 est une vue de profil et en coupe partielle du raccord d'alimentation montrant l'autre partie du dispositif de transfert selon l'invention;

- la fig. 5 est une vue en bout du raccord d'alimentation; et

- la fig. 6 est une vue en coupe partielle de la pièce à main et du raccord d'alimentation réunis ensemble.

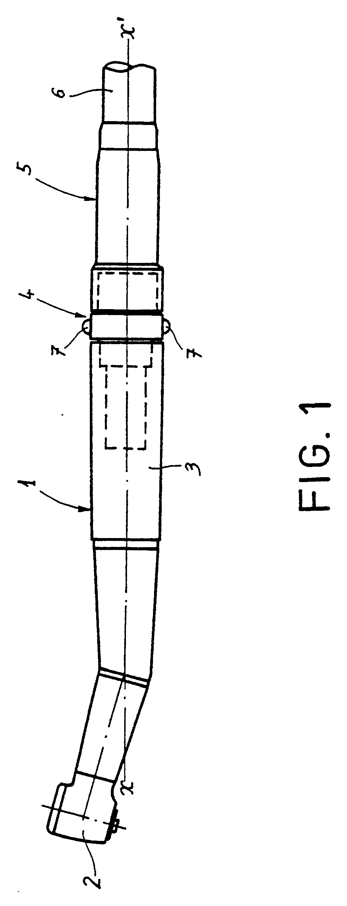

Sur la fig. 1 la référence 1 désigne une pièce à main dentaire qui comprend un manche 3 de forme tubulaire permettant de la tenir, et une tête 2 disposée à une extrémité de ce manche. La tête 2 est agencée pour recevoir et mettre en mouvement un outil, par exemple une fraise non représentée. A cet effet la tête contient un moteur qui, dans le cas présent, est supposé être une turbine à air de type connu, mais ce moteur pourrait aussi se présenter sous la forme d'un moteur électrique ou, dans le cas d'un détartreur, d'un transducteur piézoélectrique. La pièce à main contient généralement en outre un dispositif d'éclairage électrique servant à illuminer la plage de travail, et des conduits amenant l'eau de rinçage et l'air de séchage.

L'autre extrémité du manche 3 est fixée de manière amovible sur un raccord d'alimentation 4, ce raccord étant relié rigidement à une prise 5 au moyen d'un manchon fileté permettant, en cas de nécessité, de le séparer de cette prise. La prise 5 est, de son côté, disposée à l'extrémité d'un conduit souple 6, ce conduit amenant d'un appareil d'alimentation non représenté mais connu en soi, au moyen de tuyaux et de fils électriques, des fluides, tels que l'air et l'eau, et des courants électriques nécessaires au fonctionnement de la pièce à main.

Pour faciliter au praticien la manipulation de la pièce à main 1, celle-ci est montée sur le raccord 4 de manière à pouvoir tourner librement autour d'un axe longitudinal $xx'$ commun aux deux pièces.

Le maintien de la pièce à main 1 sur le raccord 4 est obtenu au moyen d'un dispositif de verrouillage, non représenté mais connu en soi. Ce dispositif est commande par deux boutons extérieurs 7 disposés sur le raccord, une pression sur ces boutons permettant de dégager aisément la pièce à main, afin de la remplacer par une autre, en déplaçant celle-ci suivant l'axe $xx'$.

La construction de la pièce à main 1 et de la partie du raccord 4 venant coopérer avec celle-ci, est particulière a chaque fabricant. Par contre l'autre partie du raccord est en général réalisée de manière à pouvoir s'adapter sur une prise connue, qui ne sera pas décrite, utilisée par la majorité des fabricants d'instruments dentaires et jouant de ce fait le rôle d'une prise standard. Bien entendu dans un but de simplification, le raccord 4 pourrait être relié directement au conduit 6, mais cela au détriment de la souplesse d'utilisation de l'équipement.

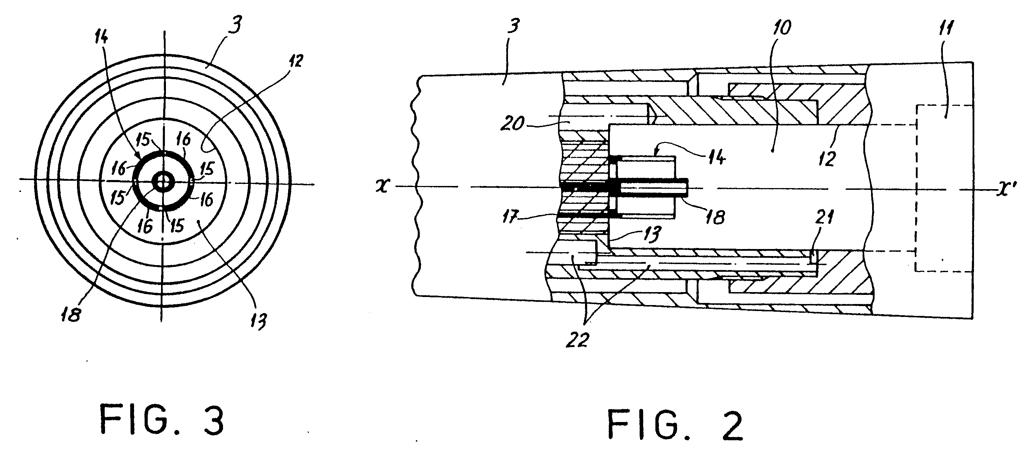

L'extrémité du manche 3 venant se fixer sur le raccord 4 est representée en détail sur les fig. 2 et 3. Cette partie du manche à extérieurement la forme d'un corps de révolution dont l'axe de symétrie se confond avec l'axe longitudinal $xx'$ commun à la pièce à main 1 et au raccord 4 lorsqu'ils sont réunis ensemble. A l'intérieur du manche 3 se trouve une cavité cylindrique 10 dont l'axe de symétrie est l'axe $xx'$. Cette cavité, qui débouche à l'extérieur par une partie cylindrique 11 de diamètre plus grand, est délimitée intérieurement par une face latérale cylindrique 12 et une face plane 13, cette dernière face, disposée perpendiculairement à l'axe $xx'$, étant au moins partiellement isolante.

Dans la cavité 10 une électrode cylindrique 14 est disposée sur la partie isolante de la face 13, près de l'axe $xx'$ et coaxialement à la face 12. Cette disposition montre que le diamètre extérieur de l'électrode 14 est sensiblement inférieur au diamètre intérieur de la cavité 10. L'électrode 14 comporte quatre fentes longitudinales 15, ces fentes délimitant quatre languettes flexibles 16. Enfin un conducteur électrique 17 est connecté à l'électrode 14 pour conduire le courant fourni par cette électrode jusqu'a son point d'utilisation.

Une électrode cylindrique 18, similaire à l'électrode 14, est en outre disposée à l'intérieur de cette dernière, au centre de la face 13. Les électrodes 14 et 18 peuvent ainsi constituer le chemin d'aller et de retour pour le courant alimentant, par exemple, la lampe du dispositif d'éclairage. Bien entendu encore d'autres électrodes pourraient être disposées de la même manière sur la face 13, coaxialement aux électrodes 14 et 18. Toutes ces électrodes se trouvant à l'intérieur de la cavité 10, sont évidemment protégées des chocs.

La cavité 10 communique, dans la région ou les parois 12 et 13 se joignent, avec un conduit longitudinal 20. Ce conduit, qui est pratiqué au moins partiellement dans la paroi de la pièce à main 1, est destiné à conduire jusqu'à la turbine, disposée dans la tête 2, l'air sous pression nécessaire à son fonctionnement. Dans la cavité 10 débouche en outre un conduit radial 21. Ce conduit, qui est dispose de manière connue sensiblement au milieu de la cavité, communique avec un conduit longitudinal 22, similaire au conduit 20, pour amener à un gicleur se trouvant près de la tête 2 l'eau nécessaire au rinçage. D'autres conduits, semblables aux conduits 21 et 22, pourraient bien entendu être encore disposés dans la pièce à main pour conduire, par exemple, l'air destiné au séchage de la plage de travail.

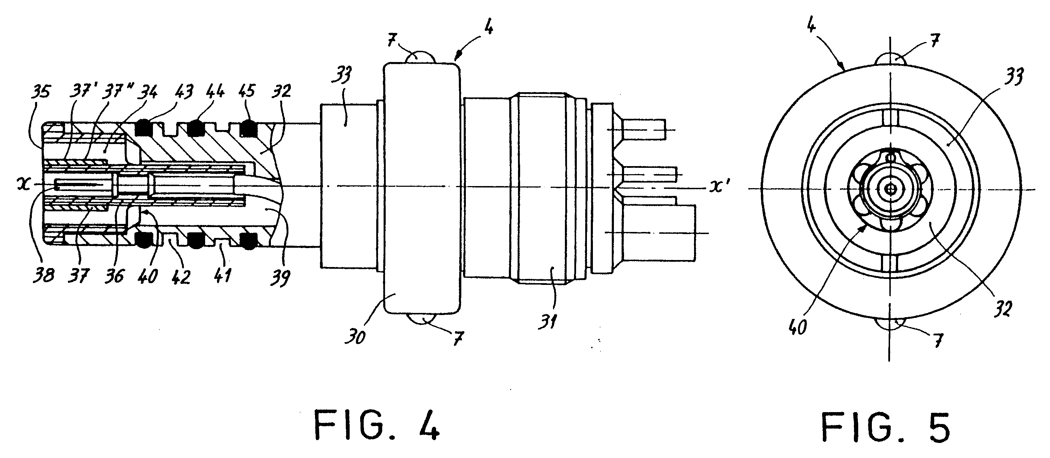

Le raccord 4 est représenté en détail sur les fig. 4 et 5. Il comprend essentiellement un corps principal 30 supportant les boutons 7, une partie tubulaire 31 de construction connue disposée d'un côté de ce corps et agencée pour recevoir la prise 5, et, de l'autre côté, un organe cylindrique 32 venant se rattacher au corps principal 30 par une partie cylindrique 33 de diamètre plus grand. Les axes de symétrie des parties 32 et 33 se confondent avec l'axe longitudinal xx' du raccord 4, alors que les diamètres extérieurs de ces parties sont égaux respectivement aux diamètres intérieurs de la cavité 10 et de la partie 11 du manche 3. L'organe cylindrique 32 peut, dans ces conditions, être disposé dans la cavité 10, la partie 33 venant alors prendre place dans la partie 11, afin d'établir une liaison pour les courants et les fluides entre le raccord 4 et la pièce à main 1.

A cet effet, l'organe 32 comporte une cavité cylindrique 34 disposée coaxialement à cet organe et débouchant à l'extérieur par une ouverture circulaire 35. A l'intérieur de la cavité 34 se trouve un tube isolant 36 sur la face extérieure duquel est disposée une électrode cylindrique 37 dont l'axe de symétrie se confond avec l'axe longitudinal xx'. Cette électrode, qui se trouve également près de l'axe xx', présente une face extérieure 37' cylindrique de diamètre égal au diamètre intérieur de l'électrode 14, une partie de la face 37' constituant une piste de contact circulaire 37'' pour cette dernière électrode. La liaison électrique entre l'électrode 37 et la prise 5, lorsque cette prise est fixée sur la partie 31 du raccord, est obtenu de manière connue au moyen d'un conducteur non représenté. A l'intérieur du tube 36 se trouve encore une électrode 38. Cette électrode se présente sous la forme d'une tige fendue qui est disposée coaxialement à l'électrode 38 et dont le diamètre est égal au diamètre inférieur de l'électrode 18. Les électrodes 37 et 38, éventuellement d'autres électrodes similaires, étant disposées à l'intérieur de la cavité 34, ces électrodes se trouvent bien entendu efficacement protégées contre les chocs et les courts-circuits.

A l'intérieur du raccord 4 est pratiqué un conduit longitudinal 39. Ce conduit, qui à pour fonction de canaliser l'air sous pression fourni par la prise 5 pour la turbine, débouche dans la cavité 34 à travers une bague de répartition 40 comportant six orifices. L'organe cylindrique 32 comprend en outre, disposée à sa périphérie ainsi que cela est connu de l'art intérieur, une gorge 41 pour conduire l'eau de rinçage, cette gorge étant centrée sur l'axe xx' et placée de manière à venir en regard du conduit radial 21 du manche 3 lorsque celui-ci est fixé sur le raccord 4. A cet effet la gorge communique avec un conduit non représenté, ce conduit amenant l'eau depuis la prise 5. Une gorge similaire 42 est encore disposées sur l'organe 32 pour transférer, de la même manière que precédémment, l'air de séchage à un conduit radial correspondant non représenté du manche 3. Enfin, pour éviter que les fluides circulant dans les gorges 41 et 42 ne s'échappent à l'extérieur lorsque la pièce à main 1 est fixée sur le raccord 4, des joints d'étanchéité annulaires 43, 44 et 45, par exemple du type 0 ring, sont disposés de manière connue de part et d'autre de chaque gorge et parallélement à ces gorges dans des logements pratiques dans la paroi de l'organe cylindrique 32. Le joint d'étanchéité 44 est placé entre les gorges 41 et 42, alors que les joints 43 et 45 sont disposés à l'extérieur, le premier se trouvant du côté de l'ouverture 35. Pour assurer l'étanchéité, chaque joint prend bien entendu fermement appui contre la face latérale 12 de la cavité cylindrique 10.

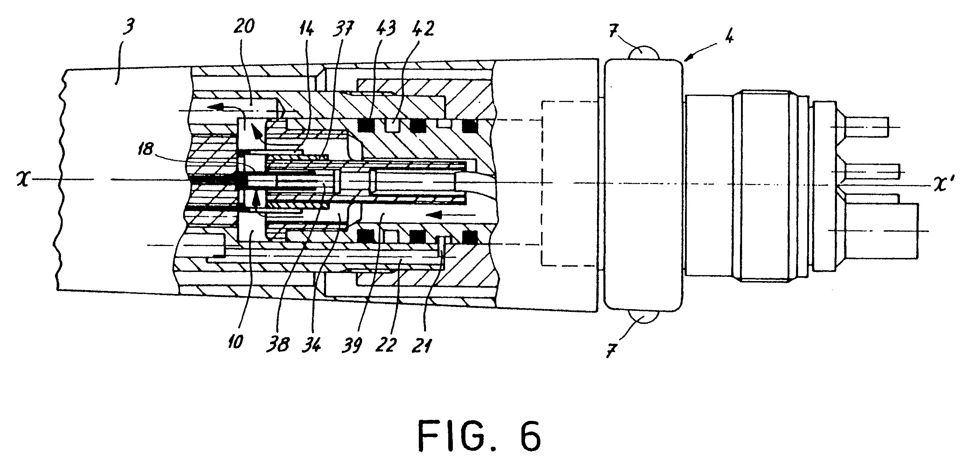

Dans ces conditions, le manche 3 étant fixé sur le raccord 4 ainsi que cela est représenté sur la fig. 6, l'électrode 14 vient en contact de l'électrode 37 suivant la piste 37'' à travers l'ouverture 35, et l'électrode 18 en contact de l'électrode 38. De même le conduit 20 vient en liaison avec le conduit 39 par les cavités 10 et 34, l'air sous pression, que le joint d'étanchéité 43 empêche de s'échapper à l'extérieur, passant du conduit 39 dans le conduit 20 comme l'indiquent les flèches en traversant les deux cavités et les fentes 15 de l'électrode 14. Enfin le conduit radial 21 vient en regard de la gorge 41 pour permettre la circulation de l'eau de rinçage. Bien entendu les contacts entre les électrodes et les liaisons entre les conduits ne sont pas interrompus si la pièce à main 1 tourne autour de l'axe longitudinal xx'.

Les fluides (air, eau) ne sont fournis qu'à la demande par l'appareil d'alimentation auquel est relié le conduit souple 6, par exemple au moyen d'une pression sur une pédale. La pièce à main 1 étant séparée du raccord 4, aucun fluide ne s'écoule donc de ce dernier. Par contre, au moment où la pièce à main 1 est retirée du raccord 4, les conduits 21 et 22 de celle-ci sont évidemment gorgés d'eau. Etant donné la disposition de ces conduits, il va de soi qu'au moins une partie de cette eau pourra s'écouler dans la cavité 10, puis atteindre les électrodes 14 et 18. Même si cette eau ne s'écoule pas directement dans la cavité 10, de l'humidité sera cependant toujours présente à l'endroit où le conduit 21 affleure la face 12. Lorsque la pièce à main sera de nouveau fixée sur le raccord, le joint d'étanchéité 43 de ce dernier repoussera cette humidité vers l'intérieur de la cavité 10 et sur les électrodes 14 et 18. Dans la réalisation selon l'invention, l'humidité ainsi déposée est cependant rapidement évacuée par l'air sous pression circulant dans cette partie de la cavité et autour des électrodes.

Il va de soi que le dispositif de transfert rotatif qui vient d'être décrit peut subir différentes modifications et se présenter sous d'autres variantes, évidentes à l'homme du métier, sans sortir du cadre de la présente invention. En particulier une des électrodes d'une paire d'électrodes pourrait se présenter sous la forme d'une couronne comportant une piste circulaire centrée sur l'axe xx', l'autre électrode étant constituée par un doigt flexible venant en contact de cette piste.

## Revendications

1. Dispositif rotatif de transfert angencé pour conduire un courant électrique et de l'air sous pression entre une pièce à main dentaire (1) et un raccord d'alimentation (4) et comportant à cet effet une paire d'électrodes (14, 37) pour le courant et un conduit (20, 39) pour l'air, ladite pièce et ledit raccord étant mobiles l'un par rapport à l'autre en rotation autour d'un axe longitudinal (xx') commun et en translation le long du même axe, le mouvement de translation permettant de fixér par emboîtement la pièce é main sur le raccord, ou de le séparer dudit raccord, caractérisé en ce que :
- une électrode (14) de ladite paire est disposée à l'intérieur et prés de l'axe de symétrie d'une cavité (10) sensiblement cylindrique de la pièce à main (1), ladite cavité, qui débouche à l'extérieur et dont l'axe de symétrie se confond avec ledit axe longitudinal (xx'), servant de logement à un organe cylindrique (32) dudit raccord, ledit organe étant centré sur ledit axe longitudinal;
- l'autre électrode (37) de ladite paire est disposée à l'intérieur d'une cavité (34) dudit raccord et près dudit axe longitudinal (xx'), ladite cavité étant pratiquée dans ledit organe cylindrique (32) de manière à déboucher à l'extérieur par une ouverture (35) permettant à ladite électrode (14) d'établir un contact permanent avec ladite autre électrode (37) quelle que soit la position angulaire de la pièce à main par rapport au raccord; et en ce que
- une partie dudit conduit (20, 39) est constituée par au moins une partie desdites cavités (10, 34) de la pièce à main (1) et du raccord (4) afin que les électrodes (14, 37) de ladite paire se trouvent dans l'air circulant dans ledit conduit.

2. Dispositif selon la revendication 1, caractérisé en ce que l'une (37) quelconque des électrodes de ladite paire comporte une piste circulaire (37') centrée sur ledit axe (xx'), ladite piste servant de contact à l'autre électrode (14) de ladite paire.

3. Dispositif selon la revendication 2, caractérisé en ce que l'une (37) quelconque des électrodes de ladite paire a la forme d'un cylindre ayant ledit axe (xx') comme axe de symétrie, une partie au moins d'une face latérale (37') de ladite électrode cylindrique constituant ladite piste (37").

4. Dispositif selon l'une des revendications précédentes, caractérisé en ce que l'une quelconque des électrodes (14) de ladite paire comporte une partie (16) déformable élastiquement venant en contact de l'autre électrode (37).

5. Dispositif selon l'une des revendications précédentes, caractérisé en ce que ledit conduit (20, 39) est traversé par de l'air sous pression destiné à mettre en rotation une turbine à air disposée dans la tête (2) de la pièce à main (1).

FIG. 1

FIG. 3

FIG. 2

EP 0 405 206 A1

FIG. 5

FIG. 4

EP 0 405 206 A1

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 034 237  (BIEN-AIR)<br>* Page 11, lignes 16-21; page 12, lignes 1-31; figure 4 *<br>--- | 1-3 | A 61 C    1/18 |
| Y | DE-A-3 716 410  (K.K. MORITA SEISAKUSHO)<br>* Colonne 3, lignes 19-40; colonne 5, lignes 37-55; figures 2,3 *<br>--- | 1-3 | |
| A | US-A-4 600 384  (OLSEN)<br>* Colonne 2, lignes 45-46; figure 1 *<br>----- | 1 | |

|  |  |
|---|---|
| | DOMAINES TECHNIQUES RECHERCHES (Int. Cl.5) |
| | A 61 C<br>B 23 Q<br>H 01 R |

Le présent rapport a été établi pour toutes les revendications

| Lieu de la recherche | Date d'achèvement de la recherche | Examinateur |
|---|---|---|
| LA HAYE | 17-08-1990 | KOUSOURETAS I. |

EPO FORM 1503 03.82 (P0402)